# EUROPEAN PATENT SPECIFICATION

(11) **EP 1 668 815 B1**
(45) Date of publication and mention of the grant of the patent: **12.06.2019**
(21) Application number: 04789129.6
(22) Date of filing: 29.09.2004
(51) Int. Cl.: H04L 9/00

(54) **DELEGATED CERTIFICATE AUTHORITY**
DELEGIERTE ZERTIFIKATAUTORITÄT
AUTORITE DE CERTIFICATION DELEGUEE

(30) Priority: 29.09.2003 US 506148 P
(43) Date of publication of application: 14.06.2006
(73) Proprietor: Ayman, LLC, New York, NY 10011 (US)
(72) Inventor: SABNIS, Brijbhushan, S., Rockville, MD 20850 (US); SIMMONS, William, Nigel, Potomac, MD 20854 (US)
(74) Representative: Gill Jennings & Every LLP
(86) International application number: PCT/US2004/031728
(87) International publication number: WO 2005/033868

(56) References cited:
- US-A- 5 432 852
- US-A1- 2002 099 668
- US-A1- 2003 115 457
- US-B1- 6 601 171
- ELLISON INTEL B FRANTZ ELECTRIC COMMUNITIES B LAMPSON MICROSOFT R RIVEST MIT LABORATORY FOR COMPUTER SCIENCE B THOMAS SOUTHWESTERN: "SPKI Certificate Theory; rfc2693.txt", IETF STANDARD, INTERNET ENGINEERING TASK FORCE, IETF, CH, 1 September 1999 (1999-09-01), XP015008476, ISSN: 0000-0003

## Description

### BACKGROUND OF THE INVENTION

### Field of the Invention

The invention relates to managing identities in computer networks. More particularly, it relates to delegating authority to issue and manage digital certificates for use in computer networks.

### Description of the Related Art

ELLISON INTEL B FRANTZ ELECTRIC COMMUNITIES B LAMPSON MICROSOFT R RIVEST MIT LABORATORY FOR COMPUTER SCIENCE B THOMAS SOUTHWESTERN: "SPKI Certificate Theory; rfc2693.txt", IETF STANDARD, INTERNET ENGINEERING TASK FORCE, IETF, CH, 1 September 1999 (1999-09-01), XP015008476, ISSN: 0000-0003 proposes a standard form for digital certificates whose main purpose is authorization rather than authentication.

A digital certificate is a digitally signed data stream that binds a public key to an identity of a resource. Digital certificates are commonly used to authenticate the identity of a resource with which the certificate is associated. X.509 (RFC 2459) is an ITU recommendation that specifies how digital certificates should be signed, chained, and verified. A certificate authority (CA) is an organization that signs digital certificates for resources after performing some verification of the identity of the resource. The CA signs a certificate using the Public Key Infrastructure (PKI) which is a system where the certificates of trusted CAs are used to sign the certificates of unknown identities.

When verifying a X.509 certificate chain, the verifying party performs the following checks:
1) Ensures the chain is rooted in a well-known, trusted CA certificate.
2) Checks the signature for each certificate in the chain to ensure that it has not been tampered with.
3) Checks the validity period for each certificate in the chain to ensure it is valid relative to the current date and time.
4) Checks to ensure that each intermediate certificate in the chain has the X.509 attribute of CA=true.

Once the chain has been verified and possession of the corresponding private key is proven, the authenticating party is authenticated as the Distinguished Name (DN) found in the last certificate in the chain. The DN is composed of several fields including the First Name, Last Name, Country, and Organization fields. Certificates are often used to authenticate web servers. In those conventional web server authentication methods, the common name (CN) field in the certificate is set to the DNS (Domain Name Service) host name of the web server (e.g. www.example.com). By setting the CN field to the host name the certificate is bound to that particular DNS host name.

A problem with managing digital certificates today is that although the authority of the CA can be adequately delegated, it cannot be adequately divided. That is, there currently are no constraints on the delegation of authority of the CA. Today, delegation of authority is either completely granted, with no constraints, or it is not delegated at all. Although present standards permit intermediate CAs to issue digital certificates, this does little to address the problem where an organization needs to manage and acquire multiple certificates. If an organization identifies the need for more than one certificate it has three options for obtaining them.
1) The CA root can sign an intermediate CA certificate for the organization, however, doing so gives the complete authority of the CA to the organization identity obtaining the signed certificate.
2) The CA root signs for all certificates that the organization needs. This solution, however, reduces the ability of the organization to control its own environment because the organization must always return to the CA when new certificates are needed.
3) The CA root signs for a single certificate that can be used for all the organization's needs. For example, instead of issuing two certificates, one for www.example.com and another for billing.example.com, the CA would issue a certificate for *.example.com. However, this solution introduces the risk that if the certificate is compromised, it can be used for any purpose in the example.com domain, not just for its specific purpose.

Accordingly, there is a need for a root CA to issue a digital certificate to intermediate CAs without having to return the root CA to manage those certificates.

In another aspect of networking, efforts are ongoing to develop identification schemes that can be used in computer networks to identify resources across computing domains, applications and transport protocols. As part of those efforts various organizations are developing protocols, conventions and standards to implement such identification schemes.

One such organization is the Organization for the Advancement of Structured Information Systems (OASIS).

OASIS is in the process of defining the Extensible Resource Identifier (XRI) standard for abstractly identifying resources. An XRI can be represented as a Uniform Resource Identifier (URI) and, for certain XRI, may be represented as a Uniform Resource Name (URN). An XRI may be a global, local, or relative. A global XRI is resolvable and can provide a globally unique identifier.

Global XRIs have a resolvable component, the authority path, and an optional local component, the local path. The authority path is either a URI authority or an XRI Authority. XRI Authorities are globally resolvable via the XRI Resolution mechanism. An example of a Global XRI Authority-based XRI (XRI-GXA) is "xri:@:10:3:4". The resolved part includes a persistent identifier that describes the hierarchy of delegation. In the example, "xri:@:10" is a child of "xri:@", "xri:@:10:3" is a child of "xri:@:10", and "xri:@:10:3:4" is a child of "@:10:3". In this manner, XRI syntax provides a mechanism for delegation of identifiers.

These attributes of XRIs can be used to provide a more flexible and manageable solution to the CA delegation problem.

### SUMMARY OF THE INVENTION

A digital certificate, used in a computing system, includes a distinguished name (DN) field and a common name (CN) field within the DN field. The CN field contains a resource identifier that contains information identifying each of a plurality of resources in the certification path of the digital certificate, wherein the resource identifier is a XRI-GXA identifier of said source. The resource identifier can be a hierarchical identifier that specifies an identity of a trusted root resource, and an identity of a resource issuing the digital certificate. The resource identifier can contain identifiers of resources in a certification path between the trusted root resource and the resource issuing the digital certificate. The certification path leads to a trusted source for the computing system.

Features and advantages of the invention will become apparent upon consideration of the following descriptions and descriptive figures of specific embodiments thereof. While these descriptions go into specific details of the invention, it should be understood that variations may and do exist and would be apparent to those skilled in the art based on the descriptions herein.

### BRIEF DESCRIPTION OF THE DRAWINGS

Fig. 1 shows a digital certificate with a global XRI in the CN field of the certificate.
Fig. 2 is a conceptual diagram showing a hierarchical authorization relationship between CA resources in a network.

### DETAILED DESCRIPTION

The embodiments described below are described with reference to the above drawings, in which like reference numerals designate like components.

The solution to the problems described above builds on two core technologies: X.509 V3 digital certificates and XRIs. X.509 V3 is specified in RFC 3280 which is incorporated herein by reference. XRIs are presently under development by an OASIS technical committee. See the OASIS Extensible Resource Identifier Technical Committee page at http://www.oasis-open.org.

Techniques are described here for issuing and validating X.509 V3 certificates each of which identify the XRI-GXA of the owner of a resource with which the certificate is associated.

Instead of having a resource identified in the digital certificate's CN field that is certified by a sequence of trusted parties and recorded in an attached digital certificate chain, as in conventional systems, here, the CN name is divided into a series of elements. The combination of those elements are used to identify the resource in some computing system having a hierarchy of resources each of which can be directly related to the certifying parties in the digital certificate chain. By this method each element of the hierarchy can potentially be certified by a different trusted party which leads to a natural constraint on the scope of what a trusted party can certify. That is, a certifying party can only certify and sign digital certificates for resources that exist below that party in the hierarchy. For example, a XRI-GXA representation of the resource is used as the hierarchical identifier and is recorded as the resource in the CN field. Placing the XRI-GXA identifier of the resource in the CN field of a digital certificate enables much richer certificate management than in conventional systems.

The conventional certificate authority (CA) scheme provides for built-in delegation. However, not all digital certificates must be issued directly by a well-known root in a hierarchical authorization structure of CA resources. The techniques described here allow for a constrained delegation of digital certificates in a computing system of networked computers. This is achieved by enabling intermediate resources to issue certificates that can be used for authentication without having to contact the well-known root to perform the authentication. This can be achieved if a well-known root resource issues a certificate for use by an intermediate resource at a lower level in the authentication hierarchy, specifies that the intermediate resource as a CA, and specifies in the certificate an identifier of the intermediate resource that contains information sufficient to determine the identities of each resource in the certification path from the intermediate resource to the root resource. The certification path, as set forth in RFC 2828, "Internet Security Glossary," May 2000, is an ordered sequence of public-key certificates that enables a certificate user to verify the signature on the last certificate in the path, and thus enables the user to obtain a certified public key (or certified attributes) of the resource that is the subject of that last certificate.

Preferably the identifier of the intermediate resource is a persistent, immutable, hierarchical identifier containing information sufficient to identify the root resource and any intervening resources in the certification path. A XRI-GXA has these attributes and can be used as the identifier in the CN field of a certificate. For example, if a well-known root issues a CA certificate for a resource with the ID xri:@:10, that certificate can be used to sign certificates for resources at a lower level in the resource hierarchy, namely for resources with IDs of the form xri: @:10:* or xri:@:10.*, where * is a wildcard character representing any additional valid characters that create a valid XRI-GXA.

A client will verify that the correct authority is followed when verifying a certificate chain. For example, the certificate for the resource with the identifier xri:@:10:1:2:3 ("the xri:@:10:1:2:3 certificate") must be rooted on a well-known root. If intermediate certificates exist, they must be authoritative for the name for which they are signing. For example, a chain where the xri:@:11 certificate was used to the sign a xri: @10:1 certificate, for instance, would not be validated. However, the chain where an xri:@:10 certificate was used to sign that certificate, which in turn is signed by a well-known root, would be validated. The basic rule applied by a client for verification of a certificate chain is that it must ultimately be rooted on a well-known root that the client trusts and that each certificate with an XRI-GXA in the form "xri:@:x" can only sign certificates of the form "xri:@:x:*", where * is a wildcard character representing any valid identifier.

Additionally, the intermediate certificates in the chain should be XRI-GXA CA certificates, not just XRI-GXA certificates. The XRI-GXA CA certificates have the same common name as XRI-GXA certificates but also have a CA=true extension which allows them to sign other certificates in their XRI Authority space.

With this delegation mechanism, the well-known root CA authority does not need to be contacted on a regular basis and only needs to sign a few delegated intermediate CA certificates.

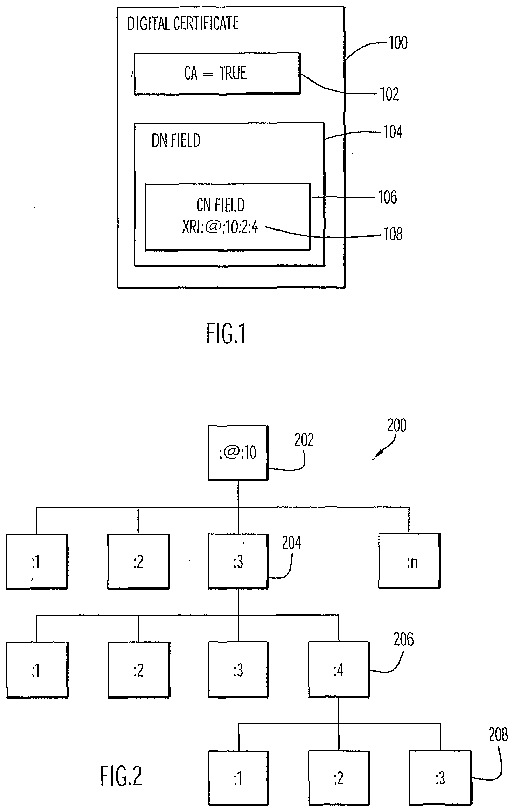

This delegation mechanism uses a XRI-GXA as the Common Name (CN) in the Distinguished Name (DN) field of the digital certificates. Such a structure is illustrated in Fig. 1, in which a digital certificate 100 has a CA extension field 102 and a DN field 104. Within the DN field is the CN field 106 that contains an identifier 108. In this case the CA=true extension is present in the certificate indicating that the certificate is authorized to sign other certificates in its namespace. Unlike conventional certificates, the CN field 106 contains an XRI-GXA. Here the XRI-GXA "xri:@:10:2:4" is present in the CN field. By using this identifier the CA signing the certificate is known to be the CA resource having the identifier "xri:@:10:2", which had its certificate signed by the CA resource "xri:@:10". In this manner the chain of authority is readily understood.

Qualifying the CA=true extension with the XRI-GXA in the CN field specifies that the resource having the certificate is authorized to manage other certificates in the namespace subordinate to the resource specified by the XRI-GXA in the CN field. Here, the certificate 100 is authorized to sign or revoke certificates in the namespace "xri:@:10:2:4:*". Not only is the resource having certificate 100 authorized to sign certificates in the "xri:@:10:2:4:*" namespace, but it also is authorized to revoke certificates in that namespace.

This ability to manage a subset of resources in a network can be appreciated by referring to Fig. 2 which shows a network of resources 200 related in a hierarchical manner. Node 202 bears an identification number "10" and is the root CA. It signs certificates for n resources, numbered 1 through n. Resource 204 has the third certificate signed by resource 202 and accordingly bears xri:@:10:3. Resource 204 in turn signs certificates for four other resources, including resource 206 which bears xri:@:10:3:4. Resource 206 signs certificates for three other resources including resource 208 which bears xri:@:10:3:4:3. Assuming the certificate for resource 208 is compromised, only its certificate and those subordinate to it need be revoked since resource 208 is authorized to sign certificates only for resources subordinate to it. Similarly, a compromise of resource 206 would only necessitate revocation of all certificates bearing xri:@:10:3:4:3:*.

The following examples illustrate how the use of a hierarchical identifier, such as an XRI-GXA, in the CN field of a digital certificate facilitates the delegation of a CA's authority.

### Example 1: Distribution of Digital Certificates

Distribution of digital certificates whose Common Names conform to a strict delegation hierarchy can be efficiently employed in the establishment of peer-to-peer secure connections between previously unknown participants. Peer-to-peer connections generally demand that both sides of the connection provide authentication credentials. This is in contrast to browser-to-web server connections where usually only the web server authenticates itself. Peer-to-peer SSL connections (client-side SSL) require that both the source and destination of the connection use a digital certificate for the initial data exchange and establishment of symmetric keys for the subsequent traffic. Each side needs to trust the root certificate that is being used to authenticate to the other. In this example, a set of 'rules' is established that can be used to check the validity of a previously unknown certificate. For example, the certificate must be derived from a trusted root; each certificate in the certificate's signature chain must have authority over the corresponding hierarchic element identified in the certificate's CN and the CA=true extension; and each certificate in the certificate's signature chain must not have been revoked.

This method only implies trust only about the identity of the end points, and it is left to higher levels elements to resolve the trust issues concerning any data exchange.

### Example 2: Trusted Resolution

In a hierarchic cooperative name resolution scheme where name elements are progressively resolved at different address locations in a network (e.g. the resolution of domain names through Domain Name Services (DNS)), the certification mechanism described here can be used to provide a trusted resolution scheme.

Consider resolution of a hierarchic name (//a.b.c) via a cooperating set of name resolvers in a network. A root resolver at address (:10) may be contacted to resolve the first element of the name (a). If (a) is resolved to have further elements translated at address (:20) then the root resolver uses its certificate, authenticating its address (:10), to sign the message that (a) resolves to (:20). The resolver at address (:20) is then contacted to resolve the next element (b) in the name, which resolves to address (:30). So a message is signed using the (:20) certificate that (b) resolves to address (:30). The resolver at address (:30) is contacted to resolve the name element (c) and the process is repeated.

By signing the translation of each element of the name, the resolver is not only authenticating itself, but is also providing translation messages that can be cached in non-secure stores. Accordingly, the entire resolution process can be handled by non-secure communications links. Also, the translation messages can be signed offline, *a priori,* thereby avoiding the need for the private key of the certificate during the resolution process, which is a much safer solution.

### Example 3: Hierarchic certificate revocation.

The use of certificates to authenticate a hierarchic network-addressing scheme, leads to an efficient mechanism for the revocation of such certificates, since each level in the hierarchy is aware of its children.

Rather than have a central network point (e.g. Online Certificate Status Protocol (OCSP)) that can be queried for certificates that have been revoked, the certificate-issuing resource (CA or delegated CA) is also queried for revocations. Therefore, if the resource at address (xri:@:10:3:4) is a CA and has issued certificates for (xri:@:10:3:4:1) and (xri:@:10:3:4:3) and the latter is compromised, then (xri:@:10:3:4) is obliged to hold the revocation information for (xri:@:10:3:4:3), but the certificate for (xri:@:10:3:4:1) need not be revoked. Thus, at a minimum, the certificate revocation has been distributed to the distributed CA points. This distribution provides for a degree of efficiency, and resilience.

The digital certificates described here typically are held in a computer-readable memory, such as a semiconductor memory, a magnetic disk, or an optical disk. It will be understood that the digital certificates can be generated and read by an appropriately programmed computer.

Having described apparatuses, articles of manufacture and methods of delegating certificate authority, it is believed that other modifications, variations and changes will be suggested to those skilled in the art in view of the teachings set forth herein. It is therefore to be understood that all such variations, modifications and changes are believed to fall within the scope of the present invention as defined by the appended claims. Although specific terms are employed herein, they are used in their ordinary and accustomed manner only, unless expressly defined differently herein, and not for purposes of limitation.

## Claims

1. A digital certificate (100), comprising:
a distinguished name, DN, field (104); and
a common name, CN, field (106) within the DN field, containing a resource identifier (108), wherein the resource identifier contains information identifying each of a plurality of certificate-issuing resources in the certification path of the digital certificate, and wherein the resource identifier is a Global XRI Authority-based Extensible Resource Identifier, XRI-GXA, of said resource.

2. The digital certificate of claim 1, wherein the resource identifier is a hierarchical identifier specifying an identity of a trusted root resource, and an identity of a resource issuing the digital certificate.

3. The digital certificate of claim 1, wherein the resource identifier further contains identifiers of certificate-issuing resources in a certification path between the trusted root resource and the resource issuing the digital certificate.

4. The digital certificate of claim 1, wherein the digital certificate is for use in a computing system, and the certification path leads to a trusted source for the computing system.

5. A method for generating a digital certificate with an authority identification field, comprising:
signing the digital certificate; and
inserting into the authority identification field a resource identifier that contains information identifying each of a plurality of certificate-issuing resources in a certification path of the digital certificate, wherein the resource identifier is a XRI-GXA identifier of said resource.

6. The method of claim 5, wherein the resource identifier is a hierarchical identifier specifying an identity of a trusted root resource, and an identity of a resource issuing the digital certificate.

7. The method of claim 5, wherein the resource identifier further contains identifiers of resources in a certification path between the trusted root resource and the resource issuing the digital certificate.

8. The method of claim 5, wherein the digital certificate is for use in a computing system, and the certification path leads to a trusted source for the computing system.

9. A computer readable medium of program instructions for generating a digital certificate with an authority identification field, the program instructions executable by a computer to perform the method steps of any one of claims 5 to 8.

10. A method of revoking a digital certificate having an authority identification field containing a resource identifier that contains information identifying each of a plurality of certificate-issuing resources in a certification path of the digital certificate, wherein the resource identifier is a XRI-GXA identifier of said resource, the method comprising:
identifying the certificate-issuing resource that issued the digital certificate based on the resource identifier in the authority identification field of the digital certificate; and
querying the certificate-issuing resource to determine if the digital certificate has been revoked.

11. The method of claim 10, wherein the resource identifier is a hierarchical identifier specifying an identity of a trusted root resource and an identity of the certificate-issuing resource.

12. The method of claim 10, wherein the resource identifier further contains identifiers of resources in a certification path between the trusted root resource and the certificate-issuing resource.

13. The method of claim 10, wherein the digital certificate is for use in a computing system, and the certification path leads to a trusted source for the computing system.

## Patentansprüche

1. Digitales Zertifikat (100), Folgendes umfassend:
ein Feld für einen eindeutigen Namen (*distinguished name-* DN) (104); und
ein Feld für einen allgemeinen Namen (*common name* - CN) (106) innerhalb des DN-Feldes, das einen Ressourcenbezeichner (108) enthält, wobei der Ressourcenbezeichner Informationen enthält, die jede aus mehreren zertifikatausstellenden Ressourcen in dem Zertifizierungspfad des digitalen Zertifikats identifizieren, und wobei der Ressourcenbezeichner ein globaler XRI, autoritätsbasierter, erweiterbarer Ressourcenbezeichner (*Global XRI Authority-based Extensible Resource Identifier -* XRI-GXA) dieser Ressource ist.

2. Digitales Zertifikat nach Anspruch 1, wobei der Ressourcenbezeichner ein hierarchischer Bezeichner ist, der eine Identität einer vertrauenswürdigen Stammressource und eine Identität einer Ressource, die das digitale Zertifikat ausstellt, angibt.

3. Digitales Zertifikat nach Anspruch 1, wobei der Ressourcenbezeichner ferner Bezeichner von zertifikatausstellenden Ressourcen in einem Zertifizierungspfad zwischen der vertrauenswürdigen Stammressource und der Ressource, die das digitale Zertifikat ausstellt, enthält.

4. Digitales Zertifikat nach Anspruch 1, wobei das digitale Zertifikat zur Verwendung in einem
Computersystem ist und der Zertifizierungspfad zu einer vertrauenswürdigen Quelle für das Computersystem führt.

5. Verfahren zum Erzeugen eines digitalen Zertifikats mit einem Autoritätsidentifizierungsfeld, Folgendes umfassend:
Signieren des digitalen Zertifikats; und
Einfügen eines Ressourcenbezeichners in das Autoritätsidentifizierungsfeld, der Informationen enthält, die jede aus mehreren Zertifizierungsressourcen in einem Zertifizierungspfad des digitalen Zertifikats identifizieren, wobei der Ressourcenbezeichner ein XRI-GXA-Bezeichner dieser Ressource ist.

6. Verfahren nach Anspruch 5, wobei der Ressourcenbezeichner ein hierarchischerBezeichner ist, der eine Identität einer vertrauenswürdigen Stammressource und eine Identität einer Ressource, die das digitale Zertifikat ausstellt, angibt.

7. Verfahren nach Anspruch 5, wobei der Ressourcenbezeichner ferner Bezeichner von Ressourcen in einem Zertifizierungspfad zwischen der vertrauenswürdigen Stammressource und der Ressource, die das digitale Zertifikat ausstellt, enthält.

8. Verfahren nach Anspruch 5, wobei das digitale Zertifikat zur Verwendung in einem Computersystem ist und der Zertifizierungspfad zu einer vertrauenswürdigen Quelle für das Computersystem führt.

9. Computerlesbares Medium von Programmanweisungen zum Erzeugen eines digitalen Zertifikats mit einem Autoritätsidentifizierungsfeld, wobei die Programmanweisungen von einem Computer ausführbar sind, um die Verfahrensschritte nach einem der Ansprüche 5 bis 8 durchzuführen.

10. Verfahren zum Widerrufen eines digitalen Zertifikats mit einem Autoritätsidentifikationsfeld, das einen Ressourcenbezeichner enthält, der Informationen enthält, die jede aus mehreren zertifikatausstellenden Ressourcen in einem Zertifizierungspfad des digitalen Zertifikats identifizieren, wobei der Ressourcenbezeichner ein XRI-GXA-Bezeichner der Ressource ist, wobei das Verfahren Folgendes umfasst:
Identifizieren der zertifikatausstellenden Ressource, die das digitale Zertifikat basierend auf dem Ressourcenbezeichner in dem Autoritätsidentifizierungsfeld des digitalen Zertifikats ausgestellt hat; und
Abfragen der zertifikatausstellenden Ressource zum Bestimmen, ob das digitale Zertifikat widerrufen wurde.

11. Verfahren nach Anspruch 10, wobei der Ressourcenbezeichner ein hierarchischer Bezeichner ist, der eine Identität einer vertrauenswürdigen Stammressource und eine Identität der Zertifizierungsressource angibt.

12. Verfahren nach Anspruch 10, wobei der Ressourcenbezeichner ferner Bezeichner von Ressourcen in einem Zertifizierungspfad zwischen der vertrauenswürdigen Stammressource und der zertifikatausstellenden Ressource enthält.

13. Verfahren nach Anspruch 10, wobei das digitale Zertifikat zur Verwendung in einem Computersystem ist und der Zertifizierungspfad zu einer vertrauenswürdigen Quelle für das Computersystem führt.

## Revendications

1. Certificat numérique (100), comprenant :
un champ de nom distingué, DN (104) ; et
un champ de nom commun, CN (106) dans le champ de DN, contenant un identificateur de ressource (108), l'identificateur de ressource contenant des informations identifiant chaque ressource parmi une pluralité de ressources émettrices de certificats dans le chemin de certification du certificat numérique, et l'identificateur de ressource étant un identificateur de ressource extensible basé sur l'autorité globale XRI, XRI-GXA, de ladite ressource.

2. Certificat numérique de la revendication 1, l'identificateur de ressource étant un identificateur hiérarchique spécifiant une identité d'une ressource racine approuvée, et une identité d'une ressource émettant le certificat numérique.

3. Certificat numérique de la revendication 1, l'identificateur de ressource contenant en outre des identificateurs de ressources émettrices de certificats dans un chemin de certification entre la ressource racine approuvée et la ressource émettant le certificat numérique.

4. Certificat numérique selon la revendication 1, le certificat numérique étant destiné à être utilisé dans un système informatique, et le chemin de certification menant à une source approuvée pour le système informatique.

5. Procédé de génération d'un certificat numérique ayant un champ d'identification de l'autorité, comprenant :
la signature du certificat numérique ; et
l'insertion dans le champ d'identification de l'autorité d'un identificateur de ressource qui contient des informations identifiant chaque ressource parmi une pluralité de ressources émettrices de certificats dans un chemin de certification du certificat numérique, l'identificateur de ressource étant un identificateur XRI-GXA de ladite ressource.

6. Procédé de la revendication 5, l'identificateur de ressource étant un identificateur hiérarchique spécifiant une identité d'une ressource racine approuvée, et une identité d'une ressource émettant le certificat numérique.

7. Procédé de la revendication 5, l'identificateur de ressource contenant en outre des identificateurs de ressources dans un chemin de certification entre la ressource racine approuvée et la ressource émettant le certificat numérique.

8. Procédé de la revendication 5, le certificat numérique étant destiné à être utilisé dans un système informatique, et le chemin de certification menant à une source approuvée pour le système informatique.

9. Support lisible par ordinateur d'instructions de programme pour générer un certificat numérique ayant un champ d'identification de l'autorité, les instructions du programme pouvant être exécutées par un ordinateur pour mettre en oeuvre les étapes du procédé de l'une quelconque des revendications 5 à 8.

10. Procédé consistant à révoquer un certificat numérique ayant un champ d'identification de l'autorité contenant un identificateur de ressource qui contient des informations identifiant chaque ressource parmi une pluralité de ressources émettrices de certificats dans un chemin de certification du certificat numérique, l'identificateur de ressource étant un identificateur XRI-GXA de ladite ressource, le procédé comprenant :
l'identification de la ressource émettrice de certificat qui a émis le certificat numérique basé sur l'identificateur de ressource dans le champ d'identification de l'autorité du certificat numérique ; et
l'interrogation de la ressource émettrice de certificat pour déterminer si le certificat numérique a été révoqué.

11. Procédé de la revendication 10, l'identificateur de ressource étant un identificateur hiérarchique spécifiant une identité d'une ressource racine approuvée et une identité de la ressource émettrice de certificat.

12. Procédé de la revendication 10, l'identificateur de ressource contenant en outre des identificateurs de ressources dans un chemin de certification entre la ressource racine approuvée et la ressource émettrice de certificat.

13. Procédé de la revendication 10, le certificat numérique étant destiné à être utilisé dans un système informatique, et le chemin de certification menant à une source approuvée pour le système informatique.
